# EUROPEAN PATENT APPLICATION

(11) **EP 4 410 915 A1**
(43) Date of publication of application: **07.08.2024**
(21) Application number: 22875981.7
(22) Date of filing: 21.09.2022
(51) Int. Cl.: C09J 11/06, C09J 11/08, C09J 201/00, C09J 7/30

(54) **HIGH-FREQUENCY DIELECTRIC HEATING ADHESIVE**

(30) Priority: 28.09.2021 JP 2021158105
(71) Applicant: LINTEC Corporation, Tokyo 173-0001 (JP)
(72) Inventor: MORI Yuichi, Tokyo 173-0001 (JP); TAYA Naoki, Tokyo 173-0001 (JP)
(74) Representative: Gille Hrabal Partnerschaftsgesellschaft mbB Patentanwälte
(86) International application number: PCT/JP2022/035162
(87) International publication number: WO 2023/054114

(57) **Abstract**

A high-frequency dielectric heating adhesive (1A) contains a thermoplastic resin (A) and a cyano group-containing organic compound (B), and the high-frequency dielectric heating adhesive (1A) satisfies (1) below: (1) the high-frequency dielectric heating adhesive (1A) has a total luminous transmittance of 50% or more as measured in accordance with JIS K 7361-1:1997.

## Description

### TECHNICAL FIELD

The present invention relates to a high-frequency dielectric heating adhesive.

### BACKGROUND ART

As a method for bonding an adherend using an adhesive, there has been proposed a method for bonding an adherend by, for example, high-frequency dielectric heating.

For example, Patent Literature 1 describes an adhesive to be applied between respective overlapping portions of two adherends when bonding the overlapping portions, at least one of the adherends being formed of a resin material. The adhesive described in Patent Literature 1 contains: a microwave-absorbing substance including a filler that generates heat by absorbing microwaves and has a high dielectric loss factor and; and an adhesive component. The microwave-absorbing substance is composed of carbon black or silicon carbide.

For example, Patent Literature 2 describes an adhesive including an adhesion base filled with a dielectric heating medium having dielectric heating performance, the adhesion base being composed of a material having affinity with a base material (adherend) to be bonded. The adhesive disclosed in Patent Literature 2 contains, as the dielectric heating medium, silicon carbide, zinc oxide, anatase titanium oxide, or the like.

### CITATION LIST

### PATENT LITERATURES

Patent Literature 1: JP 2008-156510 A
Patent Literature 2: JP 2014-037489 A

### SUMMARY OF THE INVENTION

### PROBLEMS TO BE SOLVED BY THE INVENTION

Carbon black or silicon carbide exhibits a black color or a color similar to a black color. Blending a considerable amount of carbon black or silicon carbide as a heat-generating medium for the purpose of sufficiently producing the heat-generating effect decreases transparency of an adhesive itself. For example, when the adhesive disclosed in Patent Literature 1 and an adherend with high transparency are bonded together to manufacture an assembly, transparency may be impaired in the bonded portion of the assembly.

On the other hand, anatase titanium oxide and zinc oxide exhibit a white color. Adhesives containing anatase titanium oxide or zinc oxide as a heat-generating medium have an improved transparency of the adhesives themselves compared with adhesives containing carbon black or silicon carbide as a heat-generating medium. However, an adhesive obtained by blending a considerable amount of anatase titanium oxide or zinc oxide for the purpose of sufficiently producing the heat-generating effect does not have sufficient transparency in some cases. For example, when the adhesive that is disclosed in Patent Literature 2 and that contains zinc oxide or anatase titanium oxide and an adherend with high transparency are bonded together to produce an assembly, it may be difficult to provide a desired transparency in the bonded portion of the assembly.

In view of the above, a high-frequency dielectric heating adhesive has been required to be further improved in terms of improvement in transparency, while maintaining the property of bonding the adhesive and an adherend in a short time.

An object of the invention is to provide a high-frequency dielectric heating adhesive that has high transparency and that enables bonding in a short time.

### MEANS FOR SOLVING THE PROBLEMS

[1] A high-frequency dielectric heating adhesive containing a thermoplastic resin (A) and a cyano group-containing organic compound (B), in which the high-frequency dielectric heating adhesive satisfies (1) below: (1) the high-frequency dielectric heating adhesive has a total luminous transmittance of 50% or more as measured in accordance with JIS K 7361-1:1997.
[2] The high-frequency dielectric heating adhesive according to [1], in which the high-frequency dielectric heating adhesive further satisfies (2) below: (2) the high-frequency dielectric heating adhesive has a dielectric property (tanδ/ε'r) of 0.008 or more, where tanδ is a dielectric loss tangent at 23 degrees C and a frequency of 40.68 MHz, and ε'r is a relative dielectric constant at 23 degrees C and a frequency of 40.68 MHz.
[3] The high-frequency dielectric heating adhesive according to [1] or [2], in which the high-frequency dielectric heating adhesive further satisfies (3) below:
   (3) the high-frequency dielectric heating adhesive has a haze value of 90% or less as measured in accordance with JIS K 7136:2000.
[4] The high-frequency dielectric heating adhesive according to any one of [1] to [3], in which the cyano group-containing organic compound (B) has a dielectric property (tanδ/ε'r) of 0.02 or more, where tanδ is a dielectric loss tangent at 23 degrees C and a frequency of 40.68 MHz, and ε'r is a relative dielectric constant at 23 degrees C and a frequency of 40.68 MHz.
[5] The high-frequency dielectric heating adhesive according to any one of [1] to [4], in which the cyano group-containing organic compound (B) has an MFR in a range from 0.5 g/10 min to 50 g/10 min at 190 degrees C.
[6] The high-frequency dielectric heating adhesive according to any one of [1] to [5], in which the cyano group-containing organic compound (B) is a cyanoethyl group-containing organic compound.
[7] The high-frequency dielectric heating adhesive according to [6], in which the cyanoethyl group-containing organic compound is at least one selected from the group consisting of cyanoethyl pullulan, cyanoethyl polyvinyl alcohol, cyanoethyl saccharose, cyanoethyl cellulose, cyanoethyl hydroxyethyl cellulose, cyanoethyl starch, cyanoethyl hydroxypropyl starch, cyanoethyl glycidol pullulan, and cyanoethyl sorbitol.
[8] The high-frequency dielectric heating adhesive according to any one of [1] to [7], in which an amount of cyano groups introduced into the cyano group-containing organic compound (B) is in a range from 50 mol% to 80 mol%.
[9] The high-frequency dielectric heating adhesive according to any one of [1] to [8], in which a content of the cyano group-containing organic compound (B) is in a range from 10 vol% to 60 vol% relative to an entirety of the high-frequency dielectric heating adhesive.
[10] The high-frequency dielectric heating adhesive according to any one of [1] to [9], in which a content of the thermoplastic resin (A) is in a range from 40 vol% to 90 vol% relative to an entirety of the high-frequency dielectric heating adhesive.
[11] The high-frequency dielectric heating adhesive according to any one of [1] to [10], in which on a surface of the high-frequency dielectric heating adhesive measured by X-ray photoelectron spectroscopy (XPS), a ratio of nitrogen atoms relative to 100 atom% of a total of carbon atoms, oxygen atoms, silicon atoms, and the nitrogen atoms is in a range from 0.05 atom% to 2 atom%.
[12] The high-frequency dielectric heating adhesive according to any one of [1] to [11], in which the high-frequency dielectric heating adhesive is a high-frequency dielectric heating adhesive sheet.

According to an aspect of the invention, it is possible to provide a high-frequency dielectric heating adhesive that has high transparency and that enables bonding in a short time.

### BRIEF DESCRIPTION OF DRAWING(S)

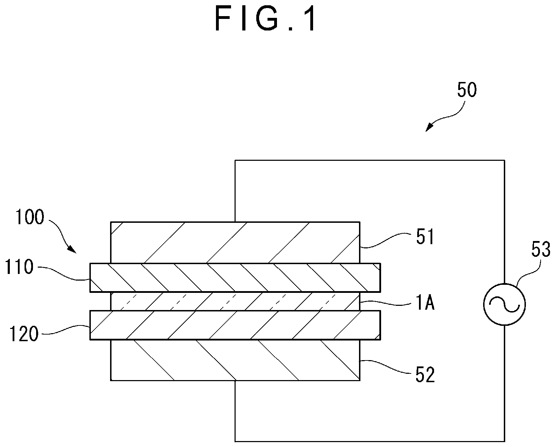

Fig. 1 is a schematic diagram illustrating an example of high-frequency dielectric heating using a high-frequency dielectric heating adhesive according to the present exemplary embodiment and a dielectric heater.

### DESCRIPTION OF EMBODIMENT(S)

### High-frequency Dielectric Heating Adhesive

A high-frequency dielectric heating adhesive according to the present exemplary embodiment contains a thermoplastic resin (A) and a cyano group-containing organic compound (B) and satisfies (1) below.
(1) The high-frequency dielectric heating adhesive has a total luminous transmittance of 50% or more as measured in accordance with JIS K 7361-1:1997.

The high-frequency dielectric heating adhesive according to the present exemplary embodiment contains a thermoplastic resin (A) and a cyano group-containing organic compound (B), so that a dielectric property equivalent to that of a high-frequency dielectric heating adhesive containing a dielectric filler such as zinc oxide is provided. Thus, the high-frequency dielectric heating adhesive according to the present exemplary embodiment enables bonding in a short time. Furthermore, the cyano group-containing organic compound (B) has higher transparency than a conductive substance such as carbon black. In addition, the total luminous transmittance of the high-frequency dielectric heating adhesive according to the present exemplary embodiment satisfies the above lower limit value. Accordingly, the high-frequency dielectric heating adhesive according to the present exemplary embodiment has high transparency and enables bonding in a short time. Note that the high-frequency dielectric heating adhesive according to the present exemplary embodiment containing the thermoplastic resin (A) and the cyano group-containing organic compound (B) has excellent toughness.

### Thermoplastic resin (A)

The type of thermoplastic resin (A) is not particularly limited.

The thermoplastic resin (A) is preferably at least one selected from the group consisting of polyolefin resins, styrene resins, polyacetal resins, polycarbonate resins, acrylic resins, polyamide resins, polyimide resins, polyvinyl acetate resins, phenoxy resins, and polyester resins from the viewpoints of, for example, being easy to melt and having predetermined heat resistance. As the thermoplastic resin (A), a type of resin having high affinity with the material of an adherend is preferably selected.

In the high-frequency dielectric heating adhesive according to the present exemplary embodiment, the thermoplastic resin (A) is preferably a polyolefin resin or a styrene resin, more preferably a polyolefin resin. In the case where the thermoplastic resin (A) is a polyolefin resin or a styrene resin, the high-frequency dielectric heating adhesive is easily melted when a high-frequency electric field is applied, and the high-frequency dielectric heating adhesive according to the present exemplary embodiment and the adherend can be easily bonded to each other.

Herein, the polyolefin resin includes a polyolefin resin having a polar moiety and a polyolefin resin having no polar moiety. When the presence or absence of a polar moiety is specified, the polyolefin resin is described as a polyolefin resin having a polar moiety or a polyolefin resin having no polar moiety.

It is also preferable that the thermoplastic resin (A) be a polyolefin resin having a polar moiety. The thermoplastic resin (A) may be a polyolefin resin having no polar moiety.

### Polyolefin resin

Examples of the polyolefin resin used as the thermoplastic resin (A) include resins formed from a homopolymer such as polyethylene, polypropylene, polybutene, or polymethylpentene; and α-olefin resins formed from a copolymer of monomers selected from the group consisting of, for example, ethylene, propylene, butene, hexene, octene, and 4-methylpentene. The polyolefin resin used as the thermoplastic resin (A) may be a single resin or a combination of two or more resins.

### Polyolefin resin having polar moiety

The polar moiety in the polyolefin resin having the polar moiety is not particularly limited as long as the moiety can impart polarity to the polyolefin resin.

The high-frequency dielectric heating adhesive preferably contains a polyolefin resin having a polar moiety as the thermoplastic resin (A) because a dielectric property is easily improved, and the adhesive force to an adherend increases.

The polyolefin thermoplastic resin having a polar moiety may be a copolymer of an olefin monomer and a monomer having a polar moiety. Alternatively, the polyolefin thermoplastic resin having a polar moiety may be a resin prepared by introducing a polar moiety through modification, such as an addition reaction, into an olefin polymer obtained by polymerization of an olefin monomer.

The type of olefin monomer constituting the polyolefin resin having a polar moiety is not particularly limited. Examples of the olefin monomer include ethylene, propylene, butene, hexene, octene, and 4-methyl-1-pentene. These olefin monomers may be used alone or in combination of two or more thereof.

The olefin monomer is preferably at least one of ethylene or propylene from the viewpoint of providing high mechanical strength and stable adhesion properties.

A structural unit derived from an olefin in the polyolefin resin having a polar moiety is preferably a structural unit derived from ethylene or propylene.

Examples of the polar moiety include a hydroxyl group, a carboxy group, a vinyl acetate structure, and an acid anhydride structure. The polar moiety may be, for example, an acid-modified structure introduced into the polyolefin resin by acid modification.

The acid-modified structure serving as the polar moiety is a moiety introduced by acid modification of the thermoplastic resin (for example, a polyolefin resin). Examples of a compound used for acid modification of the thermoplastic resin (for example, a polyolefin resin) include unsaturated carboxylic acid derivative components derived from any of unsaturated carboxylic acids, acid anhydrides of unsaturated carboxylic acids, and esters of unsaturated carboxylic acids. Herein, a polyolefin resin having an acid-modified structure may be referred to as an acid-modified polyolefin resin.

Examples of the unsaturated carboxylic acids include acrylic acid, methacrylic acid, maleic acid, fumaric acid, itaconic acid, and citraconic acid.

Examples of the acid anhydrides of unsaturated carboxylic acids include unsaturated carboxylic acid anhydrides such as maleic anhydride, itaconic anhydride, and citraconic anhydride.

Examples of the esters of unsaturated carboxylic acids include unsaturated carboxylic acid esters such as methyl acrylate, ethyl acrylate, methyl methacrylate, ethyl methacrylate, butyl methacrylate, dimethyl maleate, monomethyl maleate, dimethyl fumarate, diethyl fumarate, dimethyl itaconate, diethyl itaconate, dimethyl citraconate, diethyl citraconate, and dimethyl tetrahydrophthalic anhydride.

The volume content of the thermoplastic resin (A) in the high-frequency dielectric heating adhesive is preferably 40 vol% or more, more preferably 50 vol% or more, and still more preferably 60 vol% or more relative to the entirety of the high-frequency dielectric heating adhesive from the viewpoint of providing higher transparency and making it more possible to achieve bonding in a short time. When the volume content of the thermoplastic resin (A) in the high-frequency dielectric heating adhesive is 40 vol% or more relative to the entirety of the high-frequency dielectric heating adhesive, bonding strength with an adherend is easily obtained.

The volume content of the thermoplastic resin (A) in the high-frequency dielectric heating adhesive is preferably 99 vol% or less, more preferably 95 vol% or less, and still more preferably 90 vol% or less relative to the entirety of the high-frequency dielectric heating adhesive from the viewpoint of making it more possible to achieve bonding in a short time. When the volume content of the thermoplastic resin (A) in the high-frequency dielectric heating adhesive is 99 vol% or less relative to the entirety of the high-frequency dielectric heating adhesive, the resin is easily melted during high-frequency dielectric heating, and the bonding time with an adherend is likely to be shorter.

### Cyano group-containing organic compound (B)

The high-frequency dielectric heating adhesive according to the present exemplary embodiment contains a cyano group-containing organic compound (B).

The cyano group-containing organic compound (B) is an organic compound containing a cyano group. The cyano group-containing organic compound (B) is not particularly limited as long as the compound has one or more cyano groups (-CN). From the viewpoint of easily obtaining a high-frequency dielectric heating adhesive that has high transparency and that enables bonding in a short time, the cyano group-containing organic compound (B) is preferably, for example, a cyano group-containing organic compound (B) other than nitrile rubber (that is, a cyano group-containing organic compound (B) (provided that nitrile rubber is excluded)).

The cyano group-containing organic compound (B) is not particularly limited and may be, for example, specifically, an organic compound having a cyano group, such as succinonitrile and polyacrylonitrile. The cyano group-containing organic compound (B) may be, for example, an organic compound having a cyanoalkyl group (cyanoalkyl group-containing organic compound). From the viewpoint of easily obtaining a high-frequency dielectric heating adhesive that has higher transparency and that is more likely to be bonded in a short time, the cyano group-containing organic compound (B) is preferably a cyanoalkyl group-containing organic compound.

The cyanoalkyl group-containing organic compound is, for example, an organic compound having a group represented by a formula (10) below.

-R₁-CN ... (10)

In the formula (10), R₁ represents a linear or branched alkylene group having 1 to 6 carbon atoms.

The alkylene group represented by R₁ in the formula (10) is preferably a linear alkylene group having 2 to 6 carbon atoms, more preferably a linear alkylene group having 2 to 4 carbon atoms, and still more preferably an alkylene group having 2 carbon atoms.

The cyanoalkyl group is, for example, specifically, a group selected from the group consisting of a cyanomethyl group, a cyanoethyl group, a cyanopropyl group, a cyanobutyl group, a cyanopentyl group, and a cyanohexyl group. Of these, the cyanoalkyl group is preferably at least one group selected from the group consisting of a cyanoethyl group, a cyanopropyl group, and a cyanobutyl group. The cyanoalkyl group is more preferably a cyanoethyl group from the viewpoint of providing higher transparency and making it more possible to achieve bonding in a short time.

That is, from the viewpoint of providing high transparency and making it possible to achieve bonding in a short time, the cyano group-containing organic compound (B) is preferably a cyanoalkyl group-containing organic compound having a linear or branched alkylene group having 1 to 6 carbon atoms, more preferably a cyanoalkyl group-containing organic compound having a linear alkylene group having 2 to 6 carbon atoms, still more preferably a cyanoalkyl group-containing organic compound having a linear alkylene group having 2 to 4 carbon atoms, and still further more preferably a cyanoethyl group-containing organic compound (an organic compound having a cyanoethyl group).

A cyanoalkyl group-containing organic compound used as the cyano group-containing organic compound (B) is, for example, an organic compound having hydroxyl groups, in which at least one of the hydroxyl groups contained in the organic compound is cyanoalkylated. The cyano group-containing organic compound (B) is preferably, for example, a compound having at least one of a group represented by a formula (10X) below or a group represented by a formula (10Y) below.

-O-R₁-CN ... (10X)

-CH₂-O-R₁-CN ... (10Y)

In the group represented by the formula (10X) and the group represented by the formula (10Y), R₁ represents the same as R₁ in the group represented by the formula (10) above.

The cyano group-containing organic compound (B) is more preferably a compound having at least one of a group represented by a formula (10X-1) below or a group represented by a formula (10Y-1) below from the viewpoint of providing higher transparency and making it more possible to achieve bonding in a short time.

-O-CH₂CH₂-CN ··· (10X-1)

-CH₂-O-CH₂CH₂-CN ··· (10Y-1)

Examples of the organic compound having hydroxyl groups to be cyanoalkylated include polyhydric alcohols (such as sorbitol, xylitol, and erythritol), disaccharides (such as maltose, sucrose, and lactose), polysaccharides (such as cellulose, pullulan, and starch), synthetic polymers (such as polyvinyl alcohol), and derivatives thereof.

In the case where an organic compound having hydroxyl groups is used as a precursor of the cyano group-containing organic compound (B), a compound for cyano group modification, the compound being capable of modifying a hydroxyl group into a cyano group, may be used.

An organic compound that modifies a hydroxyl group into a cyano group and that is used as the compound for cyano group modification is not particularly limited and may be, for example, a cyanoalkene compound (such as acrylonitrile). Cyanoalkylation of an organic compound having hydroxyl groups is performed by, for example, causing an organic compound having hydroxyl groups (for example, pullulan) to react with a cyanoalkene compound (for example, acrylonitrile) in the presence of an alkali catalyst.

From the viewpoint of providing higher transparency and making it more possible to achieve bonding in a short time, examples of the cyano group-containing organic compound (B) include polymers obtained by cyanoalkylating a polysaccharide (such as cellulose, pullulan, or starch), a synthetic polymer (such as polyvinyl alcohol), or a derivative thereof. Of these, the cyano group-containing organic compound (B) is preferably, for example, an organic compound formed of monosaccharides (such as glucose, galactose, and fructose) that are bonded through glycosidic bonds, the hydroxyl groups of which are cyanoalkylated. The cyano group-containing organic compound (B) is more preferably an organic compound in which at least one of hydroxyl groups in side chains of a pyranose ring is cyanoalkylated, the organic compound having, in the side chains of the pyranose ring, at least one of a group represented by the formula (10X) or a group represented by the formula (10Y). The organic compound having, in side chains of a pyranose ring, at least one of a group represented by the formula (10X) or a group represented by the formula (10Y) is not particularly limited.

Specific examples of the cyano group-containing organic compound (B) include cyanoethyl pullulan, cyanoethyl polyvinyl alcohol, cyanoethyl saccharose (cyanoethyl sucrose), cyanoethyl cellulose, cyanoethyl hydroxyethyl cellulose, cyanoethyl hydroxypropyl cellulose, cyanoethyl amylose, cyanoethyl starch, cyanoethyl dihydroxypropyl starch, cyanoethyl glycidol pullulan, cyanoethyl sorbitol, and cyanoethyl polyhydroxy methylene. As the cyano group-containing organic compound (B), one or two or more of the above exemplified compounds may be used.

From the viewpoint of providing higher transparency and making it more possible to achieve bonding in a short time, the cyano group-containing organic compound (B) is preferably at least one selected from the group consisting of cyanoethyl pullulan, cyanoethyl polyvinyl alcohol, cyanoethyl saccharose, cyanoethyl cellulose, cyanoethyl hydroxyethyl cellulose, cyanoethyl starch, cyanoethyl hydroxypropyl starch, cyanoethyl glycidol pullulan, and cyanoethyl sorbitol. Of these, the cyano group-containing organic compound (B) is preferably at least one of cyanoethyl pullulan or cyanoethyl cellulose.

From the viewpoint of making it more possible to achieve bonding in a short time, a dielectric property (tanδ/ε'r) of the cyano group-containing organic compound (B) is preferably 0.02 or more, more preferably 0.04 or more, and still more preferably 0.06 or more. The upper limit of the dielectric property is not particularly limited. The dielectric property of the cyano group-containing organic compound (B) may be 0.1 or less or may be 0.08 or less, for example. The dielectric property of the cyano group-containing organic compound (B) may satisfy, for example, in a range from 0.02 to 0.08.

The dielectric property of the cyano group-containing organic compound (B) can be measured by the same measurement method as a method for measuring a dielectric property of a high-frequency dielectric heating adhesive described later.

The melt flow rate (MFR) of the cyano group-containing organic compound (B) at 190 degrees C is preferably 0.5 g/10 min or more, more preferably 1.0 g/10 min or more, and still more preferably 2.0 g/10 min or more.

The melt flow rate (MFR) of the cyano group-containing organic compound (B) at 190 degrees C is preferably 600 g/10 min or less, more preferably 500 g/10 min or less, and still more preferably 400 g/10 min or less.

The MFR of the cyano group-containing organic compound (B) can be measured by a method described in the section of Examples below.

From the viewpoint of providing high transparency and making it possible to achieve bonding in a short time, the amount of cyano groups introduced into the cyano group-containing organic compound (B) is preferably 50 mol% or more, more preferably 52 mol% or more, and still more preferably 55 mol% or more.

From the viewpoint of providing high transparency and making it possible to achieve bonding in a short time, the amount of cyano groups introduced into the cyano group-containing organic compound (B) is preferably 80 mol% or less, more preferably 78 mol% or less, and still more preferably 75 mol% or less.

The amount of cyano groups introduced into the cyano group-containing organic compound (B) is defined as, for example, a theoretical value derived from a ratio of the number of moles of nitrogen derived from cyano groups in the cyano group-containing organic compound (B) and the number of moles of hydroxyl groups in the cyano group-containing organic compound (B) and can be determined by calculation. The amount of cyano groups introduced is specifically determined as a percentage of a value obtained by dividing the number of moles of hydroxyl groups contained in the cyano group-containing organic compound (B) after being modified with a compound for cyano group modification (that is, the number of moles of hydroxyl groups modified with the compound for cyano group modification) by the number of theoretical total moles of hydroxyl groups contained in the organic compound before being modified with the compound for cyano group modification (the precursor of the cyano group-containing organic compound (B)).

From the viewpoint of providing high transparency and making it possible to achieve bonding in a short time, when a surface of the high-frequency dielectric heating adhesive is measured by X-ray photoelectron spectroscopy (XPS), a ratio of nitrogen atoms relative to 100 atom% of a total of carbon atoms, oxygen atoms, silicon atoms, and nitrogen atoms is preferably 0.05 atom% or more. The ratio of nitrogen atoms is more preferably 0.7 atom% or more, and still more preferably 0.9 atom% or more.

From the viewpoint of providing high transparency and making it possible to achieve bonding in a short time, on a surface of the high-frequency dielectric heating adhesive measured by X-ray photoelectron spectroscopy (XPS), the ratio of nitrogen atoms relative to 100 atom% of the total of carbon atoms, oxygen atoms, silicon atoms, and nitrogen atoms is preferably 2 atom% or less.

In the measurement of a surface of a high-frequency dielectric heating adhesive by XPS, if the high-frequency dielectric heating adhesive is a sheet-shaped high-frequency dielectric heating adhesive (hereinafter, may be referred to as an adhesive sheet), a surface of the adhesive sheet is measured. If the high-frequency dielectric heating adhesive is a molded body-shaped high-frequency dielectric heating adhesive having a particular shape, a surface of the molded body-shaped high-frequency dielectric heating adhesive is measured. When a surface of a high-frequency dielectric heating adhesive is measured by XPS, there may be a possibility that a signal of atoms other than carbon atoms, oxygen atoms, silicon atoms, and nitrogen atoms is detected. Also in this case, the ratio of nitrogen atoms is calculated as the ratio of nitrogen atoms relative to 100 atom% of the total of carbon atoms, oxygen atoms, silicon atoms, and nitrogen atoms.

The measurement conditions for XPS are not particularly limited. The measurement conditions are, for example, the following conditions using an XPS measurement analyzer. For example, the take-off angle of photoelectrons is in a range from 15degrees to 90degrees, the beam diameter of X rays is in a range from 9 µm to 100 µm, and the output during X-ray irradiation is in a range from 1 W to 100 W.

The volume content of the cyano group-containing organic compound (B) in the high-frequency dielectric heating adhesive is preferably 1 vol% or more, more preferably 5 vol% or more, and still more preferably 10 vol% or more relative to the entirety of the high-frequency dielectric heating adhesive from the viewpoint of providing high transparency and making it more possible to achieve bonding in a short time.

The volume content of the cyano group-containing organic compound (B) in the high-frequency dielectric heating adhesive is preferably 60 vol% or less, more preferably 50 vol% or less, and still more preferably 40 vol% or less relative to the entirety of the high-frequency dielectric heating adhesive from the viewpoint of providing high transparency and making it more possible to achieve bonding in a short time.

Note that, when the volume content of the cyano group-containing organic compound (B) in the high-frequency dielectric heating adhesive is 60 vol% or less, toughness of the high-frequency dielectric heating adhesive is also easily maintained.

### Dielectric filler

The high-frequency dielectric heating adhesive according to the present exemplary embodiment may contain a dielectric filler or may not contain a dielectric filler. From the viewpoint of easily enhancing heat generation performance of the high-frequency dielectric heating adhesive, the high-frequency dielectric heating adhesive according to the present exemplary embodiment may further contain a dielectric filler as needed, as long as transparency is not impaired.

The dielectric filler is a filler that generates heat when a high-frequency electric field is applied. The high-frequency electric field is an electric field whose direction is reversed at a high frequency.

The dielectric filler is preferably a filler that generates heat when a high-frequency electric field having a frequency range from 3 MHz to 300 MHz is applied. The dielectric filler is preferably a filler that generates heat by application of a high-frequency electric field having a frequency of, for example, 13.56 MHz, 27.12 MHz, or 40.68 MHz, in the frequency range from 3 MHz to 300 MHz.

The dielectric filler is preferably one or a combination of two or more of zinc oxide, silicon carbide (SiC), anatase titanium oxide, barium titanate, barium zirconate titanate, lead titanate, potassium niobate, rutile titanium oxide, hydrated aluminum silicate, inorganic materials having water of crystallization, such as hydrated aluminosilicates of alkali metals, and inorganic materials having water of crystallization, such as hydrated aluminosilicates of alkaline-earth metals. As for anatase titanium oxide and rutile titanium oxide serving as the dielectric filler, anatase titanium oxide is preferred in view of excellent dielectric properties.

From the viewpoint of obtaining higher heat generation performance, the dielectric filler more preferably includes at least one selected from the group consisting of zinc oxide, silicon carbide, anatase titanium oxide, and barium titanate, still more preferably includes at least one selected from the group consisting of zinc oxide, anatase titanium oxide, and barium titanate, and still further more preferably at least one of zinc oxide or anatase titanium oxide.

Among the exemplified dielectric fillers, the dielectric filler is yet still further more preferably zinc oxide because zinc oxide is available in various types, can be selected from various shapes and sizes, and can improve the adhesion properties and mechanical properties of the high-frequency dielectric heating adhesive according to its intended use. The use of zinc oxide as the dielectric filler can provide a high-frequency dielectric heating adhesive having high transparency compared with the case where any other dielectric filler is used. Among the dielectric fillers, zinc oxide has a lower density; therefore, when a high-frequency dielectric heating adhesive containing zinc oxide as the dielectric filler is used to bond an adherend, the total weight of the resulting assembly is less likely to be increased compared with the case where an adhesive containing any other dielectric filler is used. Zinc oxide does not have excessively high hardness among ceramics; therefore, it is unlikely to damage an apparatus for manufacturing the high-frequency dielectric heating adhesive. Zinc oxide is an inert oxide. Therefore, even when zinc oxide is mixed with a thermoplastic resin and the cyano group-containing organic compound (B) described above, zinc oxide causes less damage to the thermoplastic resin and the cyano group-containing organic compound (B).

The volume content of the dielectric filler in the high-frequency dielectric heating adhesive is preferably 5 vol% or less, more preferably 3 vol% or less, and still more preferably 1 vol% or less. The volume content of the dielectric filler in the high-frequency dielectric heating adhesive may be 0 vol% or more. A volume content of the dielectric filler in the high-frequency dielectric heating adhesive of 5 vol% or less is suitable from the viewpoint that the transparency of the high-frequency dielectric heating adhesive is further improved.

When the high-frequency dielectric heating adhesive according to the present exemplary embodiment contains the thermoplastic resin (A), the cyano group-containing organic compound (B), and the dielectric filler, the volume content of the dielectric filler is preferably 5 vol% or less, more preferably 3 vol% or less, and still more preferably 1 vol% or less relative to the total volume of the thermoplastic resin (A), the cyano group-containing organic compound (B), and the dielectric filler. When the high-frequency dielectric heating adhesive according to the present exemplary embodiment contains the thermoplastic resin (A), the cyano group-containing organic compound (B), and the dielectric filler, the volume content of the dielectric filler may be 0 vol% or more relative to the total volume of the thermoplastic resin (A), the cyano group-containing organic compound (B), and the dielectric filler.

The volume average particle size of the dielectric filler is preferably 1 µm or more, more preferably 2 µm or more, and still more preferably 3 µm or more.

The volume average particle size of the dielectric filler is preferably 30 µm or less, more preferably 25 µm or less, and still more preferably 20 µm or less.

The volume average particle size of the dielectric filler being 1 µm or more causes the high-frequency dielectric heating adhesive to exhibit high heat generation performance when a high-frequency electric field is applied, so that the adhesive layer can be bonded firmly to an adherend in a short time.

The volume average particle size of the dielectric filler being 30 µm or less causes the high-frequency dielectric heating adhesive to exhibit high heat generation performance when a high-frequency electric field is applied, so that the adhesive layer can be bonded firmly to an adherend in a short time. In a case where the high-frequency dielectric heating adhesive according to the present exemplary embodiment is an adhesive sheet, a volume average particle size of the dielectric filler of 30 µm or less can prevent a decrease in the strength of the high-frequency dielectric heating adhesive sheet.

The volume average particle size of the dielectric filler is measured by the following method. The particle size distribution of the dielectric filler is measured by a laser diffraction/scattering method, and the volume average particle size is calculated in accordance with JIS Z 8819-2:2001 from the results of the particle size distribution measurement.

### Additive

The high-frequency dielectric heating adhesive according to the present exemplary embodiment may contain an additive as long as the transparency and the bonding performance in a short time are not impaired, or may not contain an additive.

When the high-frequency dielectric heating adhesive according to the present exemplary embodiment contains an additive, examples of the additive include tackifiers, plasticizers, waxes, colorants, antioxidants, ultraviolet absorbers, antimicrobial agents, coupling agents, viscosity modifiers, organic fillers, and inorganic fillers. The organic fillers and the inorganic fillers used as additives are different from the dielectric fillers.

The tackifiers and the plasticizers can improve the melting properties and the adhesion properties of the high-frequency dielectric heating adhesive.

Examples of the tackifiers include rosin derivatives, polyterpene resins, aromatic-modified terpene resins, hydrides of aromatic-modified terpene resins, terpene-phenolic resins, coumarone-indene resins, aliphatic petroleum resins, aromatic petroleum resins, and hydrides of aromatic petroleum resins.

Examples of the plasticizers include petroleum-based process oils, natural oils, dialkyl esters of dibasic acids, and low-molecular-weight liquid polymers. Examples of the petroleum-based process oils include paraffin-based process oils, naphthene-based process oils, and aromatic process oils. Examples of the natural oils include castor oil and tall oil. Examples of the dialkyl esters of dibasic acids include dibutyl phthalate, dioctyl phthalate, and dibutyl adipate. Examples of the low-molecular-weight liquid polymers include liquid polybutene and liquid polyisoprene.

When the high-frequency dielectric heating adhesive according to the present exemplary embodiment contains an additive, the content of the additive in the high-frequency dielectric heating adhesive is usually preferably 0.01 mass% or more, more preferably 0.05 mass% or more, and still more preferably 0.1 mass% or more based on the total amount of the high-frequency dielectric heating adhesive. The content of the additive in the high-frequency dielectric heating adhesive is preferably 20 mass% or less, more preferably 15 mass% or less, and still more preferably 10 mass% or less.

Preferably, the high-frequency dielectric heating adhesive according to the present exemplary embodiment contains no solvent. In such a high-frequency dielectric heating adhesive containing no solvent, the problem of volatile organic compounds (VOC) caused by an adhesive used to bond with an adherend is unlikely to occur.

Preferably, the high-frequency dielectric heating adhesive according to the present exemplary embodiment does not contain carbon, a carbon compound containing carbon as a main component (for example, carbon black), or a conductive substance, such as a metal. Preferably, the high-frequency dielectric heating adhesive according to the present exemplary embodiment does not contain, for example, carbon steel, α-iron, γ-iron, δ-iron, copper, iron oxide, brass, aluminum, an iron-nickel alloy, an iron-nickel-chromium alloy, carbon fiber, or carbon black.

When the high-frequency dielectric heating adhesive according to the present exemplary embodiment contains conductive substances, the contents of the conductive substances in the adhesive are each independently preferably 7 mass% or less, more preferably 6 mass% or less, still more preferably 5 mass% or less, still further more preferably 1 mass% or less, and yet still further more preferably 0.1 mass% or less based on the total amount of the adhesive.

The content of a conductive substance in the adhesive is even still further more preferably 0 mass%.

When the content of a conductive substance in the adhesive is 7 mass% or less, the problem of dielectric breakdown that occurs during dielectric heating and causes carbonization of a bonded portion and an adherend is easily prevented.

The total content of the thermoplastic resin (A) and the cyano group-containing organic compound (B) in the high-frequency dielectric heating adhesive according to the present exemplary embodiment is preferably 80 mass% or more, more preferably 85 mass% or more, still more preferably 90 mass% or more, still further more preferably 93 mass% or more, yet still further more preferably 95 mass% or more, and even still further more preferably 99 mass% or more.

When the high-frequency dielectric heating adhesive according to the present exemplary embodiment contains the thermoplastic resin (A), the cyano group-containing organic compound (B), and the dielectric filler, the total content of these components is preferably 80 mass% or more, more preferably 85 mass% or more, still more preferably 90 mass% or more, still further more preferably 93 mass% or more, yet still further more preferably 95 mass% or more, and even still further more preferably 99 mass% or more.

### Properties of High-frequency Dielectric Heating Adhesive

### Dielectric property

In the high-frequency dielectric heating adhesive according to the present exemplary embodiment, the dielectric property (tanδ/ε'r) of the high-frequency dielectric heating adhesive is preferably 0.008 or more, more preferably 0.010 or more, and still more preferably 0.012 or more.

tanδ is a dielectric loss tangent at 23 degrees C and a frequency of 40.68 MHz, and ε'r is a relative dielectric constant at 23 degrees C and a frequency of 40.68 MHz.

When the dielectric property of the high-frequency dielectric heating adhesive is 0.008 or more, the high-frequency dielectric heating adhesive more easily generates heat during high-frequency dielectric heating, and the high-frequency dielectric heating adhesive and an adherend can be easily firmly bonded together in a short time.

In the high-frequency dielectric heating adhesive according to the present exemplary embodiment, the upper limit of the dielectric property is not particularly limited. The dielectric property of the high-frequency dielectric heating adhesive according to the present exemplary embodiment may be 0.1 or less, may be 0.08 or less, or may be 0.05 or less, for example. The dielectric property of the high-frequency dielectric heating adhesive may satisfy, for example, a range from 0.008 to 0.1.

When the dielectric property of the high-frequency dielectric heating adhesive is 0.1 or less, overheating is easily suppressed, and a portion where an adherend and the high-frequency dielectric heating adhesive come into contact with each other is unlikely to be damaged.

The dielectric property (tanδ/ε'r) is a value obtained by dividing the dielectric loss tangent (tanδ) measured using, for example, an impedance material device by the relative dielectric constant (ε'r) measured using, for example, the impedance material device.

The dielectric loss tangent (tanδ) and the relative dielectric constant (ε'r) used for the dielectric property of the high-frequency dielectric heating adhesive can be simply and accurately measured using an impedance material analyzer.

Details of a method for measuring the dielectric property of a high-frequency dielectric heating adhesive are as follows. A measurement sheet of a high-frequency dielectric heating adhesive is first prepared. When a measurement sheet needs to be prepared from an assembly, a measurement sheet having a uniform thickness is prepared by cutting or carving out from the assembly. For a high-frequency dielectric heating adhesive not in the form of a sheet but, for example, in the form of pellets, a measurement sheet is prepared by forming the pellets into a sheet with, for example, a thermal press. A thickness of the measurement sheet is, for example, in a range from 10 µm to 2 mm. A relative dielectric constant (ε'r) and a dielectric loss tangent (tanδ) of the sheet prepared as described above are measured under the conditions of a frequency of 40.68 MHz at 23 degrees C with an RF impedance material analyzer E4991A (manufactured by Agilent Technologies), and the value of the dielectric property (tanδ/ε'r) is calculated.

### Total luminous transmittance

In the high-frequency dielectric heating adhesive according to the present exemplary embodiment, the total luminous transmittance is 50% or more. The total luminous transmittance of the high-frequency dielectric heating adhesive according to the present exemplary embodiment is measured in accordance with JIS K 7361-1:1997.

When the total luminous transmittance of the high-frequency dielectric heating adhesive is 50% or more, the transparency of the high-frequency dielectric heating adhesive is enhanced. Moreover, for example, when adherends with high transparency are bonded together with the high-frequency dielectric heating adhesive according to the present exemplary embodiment, it is possible to suppress a decrease in transparency of the resulting assembly obtained by bonding the adherends with the high-frequency dielectric heating adhesive according to the present exemplary embodiment.

The total luminous transmittance of the high-frequency dielectric heating adhesive according to the present exemplary embodiment is more preferably 60% or more, still more preferably 70% or more, and still further more preferably 80% or more from the viewpoint of further enhancing the transparency of the high-frequency dielectric heating adhesive.

In the high-frequency dielectric heating adhesive according to the present exemplary embodiment, the upper limit of the total luminous transmittance is not particularly limited. The total luminous transmittance of the high-frequency dielectric heating adhesive according to the present exemplary embodiment may be 100% or less or may be 99% or less, for example.

### Haze value

In the high-frequency dielectric heating adhesive according to the present exemplary embodiment, the haze value is preferably 90% or less. The haze value of the high-frequency dielectric heating adhesive according to the present exemplary embodiment is measured in accordance with JIS K 7136:2000.

When the haze value of the high-frequency dielectric heating adhesive is 90% or less, the transparency of the high-frequency dielectric heating adhesive is enhanced. Moreover, for example, when adherends with high transparency are bonded together with the high-frequency dielectric heating adhesive according to the present exemplary embodiment, it is possible to suppress a decrease in transparency in the bonded portion of the resulting assembly obtained by bonding the adherends with the high-frequency dielectric heating adhesive according to the present exemplary embodiment.

The haze value of the high-frequency dielectric heating adhesive according to the present exemplary embodiment is more preferably 80% or less, still more preferably 70% or less, and still further more preferably 60% or less.

In the high-frequency dielectric heating adhesive according to the present exemplary embodiment, the lower limit of the haze value is not particularly limited. The haze value of the high-frequency dielectric heating adhesive according to the present exemplary embodiment may be 10% or more, may be 20% or more, may be 30% or more, or may be 40% or more, for example.

### Tensile rupture elongation

In the high-frequency dielectric heating adhesive according to the present exemplary embodiment, the tensile rupture elongation is preferably 2% or more, more preferably 3% or more, still more preferably 5% or more, still further more preferably 7% or more, and yet still further more preferably 10% or more.

In the high-frequency dielectric heating adhesive according to the present exemplary embodiment, the tensile rupture elongation is preferably 1,500% or less, more preferably 1,000% or less, still more preferably 750% or less, still further more preferably 500% or less, yet still further more preferably 200% or less, and even still further more preferably 150% or less.

At a tensile rupture elongation of the high-frequency dielectric heating adhesive of 2% or more, when the high-frequency dielectric heating adhesive and an adherend are bonded together, the handleability of the high-frequency dielectric heating adhesive is high, and processing is facilitated. For example, the high-frequency dielectric heating adhesive is easily wound in a roll shape.

At a tensile rupture elongation of the high-frequency dielectric heating adhesive of 1,500% or less, processing is facilitated when the high-frequency dielectric heating adhesive is cut into predetermined dimensions.

### Tensile modulus

In the high-frequency dielectric heating adhesive according to the present exemplary embodiment, the tensile modulus is preferably 20 MPa or more, more preferably 50 MPa or more, still more preferably 100 MPa or more, still further more preferably 200 MPa or more, and yet still further more preferably 500 MPa or more.

In the high-frequency dielectric heating adhesive according to the present exemplary embodiment, the tensile modulus is preferably 2,000 MPa or less, more preferably 1,800 MPa or less, still more preferably 1,500 MPa or less, and still further more preferably 1,000 MPa or less.

At a tensile modulus of the high-frequency dielectric heating adhesive of 20 MPa or more, when the high-frequency dielectric heating adhesive and an adherend are bonded together, the handleability of the high-frequency dielectric heating adhesive is higher, and processability is further enhanced. For example, the high-frequency dielectric heating adhesive is easily wound in a roll shape.

At a tensile modulus of the high-frequency dielectric heating adhesive of 2,000 MPa or less, processability is further enhanced when an assembly obtained by bonding the high-frequency dielectric heating adhesive and an adherend together is cut into a predetermined dimension.

Herein, the tensile modulus of the high-frequency dielectric heating adhesive can be measured in accordance with JIS K 7161-1:2014 and JIS K 7127:1999.

Herein, the tensile rupture elongation of the high-frequency dielectric heating adhesive can be measured in accordance with JIS K 7161-1:2014 and JIS K 7127:1999.

### Thickness

When the high-frequency dielectric heating adhesive according to the present exemplary embodiment is a high-frequency dielectric heating adhesive sheet (adhesive sheet), the thickness of the adhesive sheer according to the present exemplary embodiment is preferably 5 µm or more, more preferably 10 µm or more, still more preferably 30 µm or more, and still further more preferably 50 µm or more.

When the thickness of the adhesive sheet is 5 µm or more, the adhesive sheet in contact with an adherend exhibits improved heat generation performance during high-frequency application, and thus the adhesive sheet and the adherend can be easily firmly bonded together in a short time. In addition, when the adhesive sheet is bonded to an adherend, the adhesive sheet easily follows the unevenness of the adherend, and high adhesion strength is easily exhibited.

The upper limit of the thickness of the adhesive sheet is not particularly limited. As the thickness of the adhesive sheet increases, the weight of the entire assembly obtained by bonding the adhesive sheet and an adherend together also increases. Therefore, the thickness of the adhesive sheet is preferably in a range that does not cause a practical problem in terms of, for example, processability and handleability. In consideration of the practicality, formability, and transparency of the high-frequency dielectric heating adhesive sheet, the thickness of the adhesive sheet according to the present exemplary embodiment is preferably 2,000 µm or less, more preferably 1,000 µm or less, and still more preferably 600 µm or less. The upper limit of the thickness of the adhesive sheet is preferably the above-described value regardless of the shape of the adhesive sheet.

When the thickness of the adhesive sheet according to the present exemplary embodiment is 2,000 µm or less, a decrease in transparency of the high-frequency dielectric heating adhesive sheet is easily suppressed.

The adhesive sheet serving as a high-frequency dielectric heating adhesive is easily handled and also has an improved workability during bonding with an adherend, compared with the case of using a liquid adhesive that needs to be applied.

In addition, for example, the sheet thickness of the adhesive sheet serving as a high-frequency dielectric heating adhesive can be appropriately controlled. Therefore, the adhesive sheet is also applicable to a roll-to-roll process. Furthermore, the adhesive sheet can be processed by, for example, blanking into any shape with area in accordance with the adhesion area with an adherend and the shape of the adherend. Accordingly, the adhesive sheet serving as a high-frequency dielectric heating adhesive is significantly advantageous also from the viewpoint of the manufacturing process.

The high-frequency dielectric heating adhesive according to the present exemplary embodiment is preferably used by applying a high-frequency electric field in a frequency band from so-called short to ultrashort waves (for example, in a range from 3 MHz to 300 MHz). The application of a high-frequency electric field in this frequency band improves the heat generation performance during high-frequency application because it is possible to heat deeper regions. Thus, even when the high-frequency dielectric heating adhesive has a large thickness, the adhesive sheet and an adherend can be easily firmly bonded together in a short time. The high-frequency dielectric heating adhesive according to the present exemplary embodiment is preferably used for bonding to one or more adherends.

### Shape of High-frequency Dielectric Heating Adhesive

The shape of the high-frequency dielectric heating adhesive according to the present exemplary embodiment is not particularly limited. The high-frequency dielectric heating adhesive according to the present exemplary embodiment may be, for example, a molded body-shaped adhesive formed to have a desired shape by injection molding or the like, or a sheet-shaped adhesive formed by extrusion molding or the like. In the present exemplary embodiment, a molded body and a sheet have different shapes. The sheet usually refers to a long strip or sheet form having a thickness of 1 mm or less, 2 mm or less, or 5 mm or less. The molded body refers to a shape obtained by forming a material containing the components of the high-frequency dielectric heating adhesive and refers to various shapes other than sheets.

The high-frequency dielectric heating adhesive according to the present exemplary embodiment preferably has a sheet shape. That is, the high-frequency dielectric heating adhesive according to the present exemplary embodiment is preferably an adhesive sheet. When the high-frequency dielectric heating adhesive is an adhesive sheet, the time required for the manufacturing process of an assembly can be further reduced.

The shape of the high-frequency dielectric heating adhesive according to the present exemplary embodiment may be a shape of a frame-shaped sheet (frame-shaped adhesive sheet) including a frame portion and an opening extending from one surface toward the other surface of the surfaces that are opposite each other. The shape of the opening is not particularly limited. When the adhesive sheet has a frame shape, the frame-shaped adhesive sheet may have one opening or two or more openings. In the frame-shaped sheet, the frame portion may have a cut in a part thereof. In this case, the opening may have a shape in which a part of the frame portion communicates with the outside. That is, the frame portion may have an open shape in plan view of the frame-shaped sheet. The frame portion in the frame-shaped sheet may have no cut. In this case, the opening may have a shape in which the periphery of the opening is surrounded by the frame portion. That is, the frame portion may have a closed shape in plan view of the frame-shaped sheet. When the frame-shaped sheet has two or more openings, the openings may be a combination of openings having the same shape or a combination of openings having different shapes in plan view of the frame-shaped sheet. The shape of the high-frequency dielectric heating adhesive according to the present exemplary embodiment may be a sheet that does not have the opening. Furthermore, the high-frequency dielectric heating adhesive according to the present exemplary embodiment can also be formed into an adhesive sheet having a desired shape by extrusion molding or injection molding.

### Examples of high-frequency dielectric heating adhesive

In one example, the high-frequency dielectric heating adhesive according to the present exemplary embodiment is composed only of a single layer of an adhesive layer formed of the high-frequency dielectric heating adhesive sheet according to the present exemplary embodiment. When the high-frequency dielectric heating adhesive is a high-frequency dielectric heating adhesive sheet composed only of a single layer of an adhesive layer, the adhesive layer itself (the adhesive itself) corresponds to the high-frequency dielectric heating adhesive sheet; therefore, the form and properties of the high-frequency dielectric heating adhesive sheet correspond to the form and properties of the adhesive layer. The high-frequency dielectric heating adhesive sheet is preferably composed only of a single adhesive layer. This enables the thickness of the high-frequency dielectric heating adhesive sheet to be small and enables the high-frequency dielectric heating adhesive sheet to be easily formed.

The high-frequency dielectric heating adhesive sheet may be composed only of a single layer of an adhesive layer with high-frequency dielectric heating adhesiveness. Thus, herein, the terms "high-frequency dielectric heating adhesive sheet" and "adhesive layer" can be exchanged with each other in some cases.

The high-frequency dielectric heating adhesive according to the present exemplary embodiment is not limited to the example of the high-frequency dielectric heating adhesive sheet consisting of a single layer of an adhesive layer. In another example of the high-frequency dielectric heating adhesive, a high-frequency dielectric heating adhesive layer may be provided in advance on at least one of surfaces of an adherend.

### Method for manufacturing high-frequency dielectric heating adhesive

The high-frequency dielectric heating adhesive according to the present exemplary embodiment can be manufactured by, for example, mixing the foregoing components. When the high-frequency dielectric heating adhesive according to the present exemplary embodiment is an adhesive sheet, the adhesive sheet can be manufactured by, for example, premixing the foregoing components, kneading the resulting mixture using a publicly known kneading device such as an extruder or thermal rolls, and employing a publicly known molding method such as extrusion molding, calender molding, injection molding, or casting molding. When the high-frequency dielectric heating adhesive according to the present exemplary embodiment is a molded body, the molded body can be manufactured by, for example, a publicly known molding method such as injection molding or compression molding using a material prepared by premixing the foregoing components. When the high-frequency dielectric heating adhesive according to the present exemplary embodiment is a frame-shaped sheet, the frame-shaped sheet can be manufactured by forming an opening, by, for example, a publicly known method of blanking, in a sheet-shaped high-frequency dielectric heating adhesive obtained by the foregoing molding method for an adhesive sheet. Alternatively, the frame-shaped sheet can be manufactured by, in the foregoing molding method for an adhesive sheet, using a die having a shape for obtaining a desired opening.

The high-frequency dielectric heating adhesive has higher water resistance and moisture resistance than general adhesives.

The high-frequency dielectric heating adhesive according to the present exemplary embodiment is locally heated by the application of a high-frequency electric field. Therefore, the use of the high-frequency dielectric heating adhesive according to the present exemplary embodiment easily prevents the problem in that the entire adherend is damaged when bonding is performed with the adherend.

### Adherend

The material of an adherend is not particularly limited. The material of the adherend may be any of an organic material and an inorganic material (including, for example, a metal material) and may be a composite material of an organic material and an inorganic material.

The material of the adherend is preferably an organic material. Examples of the organic material serving as the material of an adherend include plastic materials and rubber materials. Examples of the plastic materials include polypropylene resins, polyethylene resins, epoxy resins, polyurethane resins, acrylonitrile-butadiene-styrene copolymer resins (ABS resins), polycarbonate resins (PC resins), polyamide resins (such as nylon 6 and nylon 66), polyester resins (such as polyethylene terephthalate (PET resins) and polybutylene terephthalate resins (PBT resins)), polyacetal resins (POM resins), polymethyl methacrylate resins, and polystyrene resins. Examples of the rubber materials include styrene-butadiene rubber (SBR), ethylene propylene rubber (EPR), and silicone rubber. The adherend may be a foamed material of an organic material.

When the material of the adherend is a thermoplastic resin, the thermoplastic resin contained in the adherend and the thermoplastic resin (A) contained in the high-frequency dielectric heating adhesive may be different resins. In this case, bonding is easily performed without impairing the shape of the adherend at the time of bonding.

When the material of the adherend is a thermoplastic resin, the main component of the thermoplastic resin contained in the adherend may be the same as the main component of the thermoplastic resin (A) contained in the high-frequency dielectric heating adhesive in view of adhesiveness.

Herein, for example, when the thermoplastic resin is a polymer containing repeating units, the "main component of the thermoplastic resin" refers to one of the repeating units contained in the largest amount in the polymer. When the thermoplastic resin is a polymer derived from a single monomer, this monomer unit (repeating unit) is the "main component of the thermoplastic resin." When the thermoplastic resin is a copolymer, one of repeating units contained in the largest amount in the polymer is the "main component of the thermoplastic resin." When the thermoplastic resin is a copolymer, the "main component of the thermoplastic resin" in the copolymer is a repeating unit (monomer unit) contained in an amount of 30 mass% or more. In one example, the "main component of the thermoplastic resin" is a repeating unit contained in an amount of more than 30 mass%. In another example, the "main component of the thermoplastic resin" is a repeating unit contained in an amount of 40 mass% or more. In still another example, the "main component of the thermoplastic resin" is a repeating unit contained in an amount of 50 mass% or more. When the thermoplastic resin is a copolymer, the repeating units contained in the largest amount may be of two or more types.

Examples of the inorganic material serving as the material of the adherend include glass materials, cement materials, ceramic materials, and metal materials. The adherend may be composed of a fiber reinforced plastic (FRP), which is a composite material of fibers and any of the foregoing plastic materials. The plastic material in the fiber reinforced plastic is at least one selected from the group consisting of, for example, polypropylene resins, polyethylene resins, polyurethane resins, acrylonitrile-butadiene-styrene copolymer resins (ABS resins), polycarbonate resins (PC resins), polyamide resins (such as nylon 6 and nylon 66), polyester resins (such as polyethylene terephthalate (PET resins) and polybutylene terephthalate resins (PBT resins)), polyacetal resins (POM resins), polymethyl methacrylate resins, epoxy resins, and polystyrene resins. Examples of the fibers in the fiber reinforced plastic include glass fibers, Kevlar fibers, and carbon fibers.

The adherend preferably has low conductivity.

When a plurality of adherends are bonded together with the high-frequency dielectric heating adhesive according to the present exemplary embodiment, the plurality of adherends are composed of the same material or different materials.

The shape of the adherend is not particularly limited. When the high-frequency dielectric heating adhesive according to the present exemplary embodiment is an adhesive sheet, the adherend preferably has a surface to which the adhesive sheet can be attached, and preferably has a sheet shape, a plate shape, or a block shape. When a plurality of adherends are bonded together, the shapes and dimensions of the adherends may be the same or different from each other.

### Bonding Method

As an example of a bonding method for bonding an adherend with the high-frequency dielectric heating adhesive according to the present exemplary embodiment, a description will be made of a method for manufacturing an assembly by bonding the high-frequency dielectric heating adhesive according to the present exemplary embodiment and an adherend together. When an assembly is manufactured by bonding an adherend with the high-frequency dielectric heating adhesive according to the present exemplary embodiment together, the method for manufacturing the assembly includes, for example, the following steps.

When an assembly is manufactured by bonding one or more adherends and the high-frequency dielectric heating adhesive according to the present exemplary embodiment together, a method for manufacturing the assembly according to the present exemplary embodiment includes disposing the high-frequency dielectric heating adhesive according to the present exemplary embodiment on one or more adherends, and applying a high-frequency electric field to the high-frequency dielectric heating adhesive to bond the one or more adherends together. The frequency of the high-frequency electric field applied is, for example, in a range from 1 MHz to 300 MHz (preferably, in a range from 3 MHz to 300 MHz).

When an assembly is manufactured by bonding two or more adherends and the high-frequency dielectric heating adhesive according to the present exemplary embodiment together, a method for manufacturing the assembly according to the present exemplary embodiment includes disposing the high-frequency dielectric heating adhesive according to the present exemplary embodiment between the two or more adherends, and applying a high-frequency electric field to the high-frequency dielectric heating adhesive to bond the two or more adherends together. Also in this case, the frequency of the high-frequency electric field applied is, for example, in a range from 1 MHz to 300 MHz (preferably, in a range from 3 MHz to 300 MHz).

In the method for manufacturing an assembly according to the present exemplary embodiment, preferably, two or more adherends and a high-frequency dielectric heating adhesive are disposed between electrodes of a dielectric heater, and a high-frequency electric field is applied while pressing the two or more adherends and the high-frequency dielectric heating adhesive with the electrodes. The application of the high-frequency electric field while pressing with the electrodes in this manner facilitates the manufacturing of the assembly in a shorter time.

Note that, herein, a "dielectric heater" may be referred to as a "high-frequency dielectric heater".

According to the manufacturing method using the high-frequency dielectric heating adhesive according to the present exemplary embodiment, only a predetermined portion can be locally heated from the outside with the dielectric heater. Therefore, even when the adherend is, for example, a large three-dimensional assembly having a complicated shape or a thick three-dimensional assembly having a complicated shape and high dimensional accuracy is required, the manufacturing method using the high-frequency dielectric heating adhesive according to the present exemplary embodiment is effective.

As an example of the method for manufacturing an assembly according to the present exemplary embodiment, an example in which two or more adherends are bonded together with the high-frequency dielectric heating adhesive according to the present exemplary embodiment will be described below; however, the invention is not limited to this example.

A bonding method according to an example of the present exemplary embodiment includes step P1 and step P2 described below.

### Step P1

Step P1 is disposing a high-frequency dielectric heating adhesive according to the present exemplary embodiment between two or more adherends. When a laminate is manufactured as an assembly according to the present exemplary embodiment, in step P1, for example, the adherends and the high-frequency dielectric heating adhesive are alternately disposed to stack the two or more adherends with the high-frequency dielectric heating adhesive disposed therebetween.

The high-frequency dielectric heating adhesive is preferably held between the adherends such that the adherends can be bonded together. The high-frequency dielectric heating adhesive may be held in a portion between the adherends, in a plurality of portions between the adherends, or over the entire surface between the adherends. From the viewpoint of improving the adhesion strength between the adherends, the high-frequency dielectric heating adhesive is preferably held over the entire bonding surface between the adherends.

An example in which the high-frequency dielectric heating adhesive is held in a portion between the adherends is an example in which the high-frequency dielectric heating adhesive is arranged in a frame shape along the outer circumference of the bonding surface between the adherends and held between the adherends. The arrangement of the high-frequency dielectric heating adhesive in a frame shape can provide high bonding strength between the adherends and can also reduce the weight of the assembly compared with the case where the high-frequency dielectric heating adhesive is arranged over the entire bonding surface.

According to the example in which the high-frequency dielectric heating adhesive is held in a portion between the adherends, the amount of the high-frequency dielectric heating adhesive used and the size thereof can be reduced. Thus, the high-frequency dielectric heating time can be reduced compared with the case where the high-frequency dielectric heating adhesive is disposed over the entire bonding surface.

### Step P2

Step P2 is applying a high-frequency electric field to the high-frequency dielectric heating adhesive disposed between the adherends in step P1 to bond the two or more adherends together. In one exemplary embodiment, the frequency of the high-frequency electric field applied is in a range from 1 MHz to 300 MHz (preferably in a range from 3 MHz to 300 MHz). The high-frequency electric field can be applied to the high-frequency dielectric heating adhesive by using, for example, a dielectric heater.

### Dielectric heater

Fig. 1 is a schematic diagram illustrating high-frequency dielectric heating using the high-frequency dielectric heating adhesive according to the present exemplary embodiment and a dielectric heater.

A dielectric heater 50 illustrated in Fig. 1 includes a first high-frequency electric field application electrode 51, a second high-frequency electric field application electrode 52, and a high-frequency power source 53.

The first high-frequency electric field application electrode 51 and the second high-frequency electric field application electrode 52 are disposed so as to face each other. The first high-frequency electric field application electrode 51 and the second high-frequency electric field application electrode 52 have a pressing mechanism. A high-frequency electric field can also be applied while pressing two or more adherends and a high-frequency dielectric heating adhesive that are disposed between the electrodes with the pressing mechanism of the electrodes (the first high-frequency electric field application electrode 51 and the second high-frequency electric field application electrode 52) of the dielectric heater 50.

Fig. 1 illustrates an example of a method for manufacturing an assembly 100 using the dielectric heater 50. With the dielectric heater 50, a first adherend 110, a high-frequency dielectric heating adhesive 1A, and a second adherend 120 can be subjected to pressure treatment between the first high-frequency electric field application electrode 51 and the second high-frequency electric field application electrode 52.

When the first high-frequency electric field application electrode 51 and the second high-frequency electric field application electrode 52 form a pair of flat-plate electrodes parallel to each other, this type of electrode arrangement may be referred to as a parallel flat-plate type.

It is also preferable to use a high-frequency dielectric heater of the parallel flat-plate type for the application of the high-frequency electric field. With the high-frequency dielectric heater of the parallel flat-plate type, the high-frequency electric field passes through the high-frequency dielectric heating adhesive located between the electrodes; thus, the entire high-frequency dielectric heating adhesive can be heated, and the adherends and the high-frequency dielectric heating adhesive can be bonded together in a short time. In the case of manufacturing a laminate as an assembly, a high-frequency dielectric heater of the parallel flat-plate type is preferably used.

The high-frequency power source 53 for applying a high-frequency electric field having a frequency of, for example, about 13.56 MHz, about 27.12 MHz, or about 40.68 MHz is connected to the first high-frequency electric field application electrode 51 and the second high-frequency electric field application electrode 52.

As illustrated in Fig. 1, the dielectric heater 50 performs dielectric heating through the high-frequency dielectric heating adhesive 1A held between the first adherend 110 and the second adherend 120. Moreover, the dielectric heater 50 performs, in addition to the dielectric heating, pressure treatment with the first high-frequency electric field application electrode 51 and the second high-frequency electric field application electrode 52 to bond the first adherend 110 and the second adherend 120 together. Note that two or more adherends may be bonded together by, for example, pressing only with own weight of the high-frequency dielectric heating adhesive and the adherends without the pressure treatment.

When a high-frequency electric field is applied between the first high-frequency electric field application electrode 51 and the second high-frequency electric field application electrode 52, the high-frequency dielectric heating adhesive 1A absorbs the high-frequency energy. As a result, the thermoplastic resin component in the high-frequency dielectric heating adhesive 1A can melt to firmly bond the first adherend 110 and the second adherend 120 together even in a short treatment time.

When the high-frequency dielectric heating adhesive 1A contains a cyano group-containing organic compound (B) (not illustrated), the cyano group-containing organic compound (B) dispersed in the adhesive component absorbs the high-frequency energy. The cyano group-containing organic compound (B) functions as a heat source. The thermoplastic resin component is melted by the heat generation of the cyano group-containing organic compound (B), so that the first adherend 110 and the second adherend 120 can finally be firmly bonded together even in a short treatment time. When the high-frequency dielectric heating adhesive 1A further contains a dielectric filler (not illustrated), the dielectric filler dispersed in the adhesive component also absorbs the high-frequency energy. The dielectric filler functions as a heat source. The thermoplastic resin component is melted by the heat generation of the dielectric filler, so that the first adherend 110 and the second adherend 120 can finally be firmly bonded together even in a short treatment time.

The electrodes (the first high-frequency electric field application electrode 51 and the second high-frequency electric field application electrode 52) of the dielectric heater 50 have the pressing mechanism, and thus the dielectric heater 50 also functions as a pressing device. Therefore, the first adherend 110 and the second adherend 120 can be more firmly bonded together by pressing in a compression direction with the first high-frequency electric field application electrode 51 and the second high-frequency electric field application electrode 52 and by heating and melting the high-frequency dielectric heating adhesive 1A. In the description of the method for manufacturing an assembly, the case of manufacturing the assembly 100 illustrated in Fig. 1 has been described as an example; however, the invention is not limited to this example.

### High-frequency dielectric heating conditions

The high-frequency dielectric heating conditions may be changed as appropriate but are preferably as follows.

The output of the high-frequency electric field is preferably 10 W or more, more preferably 30 W or more, still more preferably 50 W or more, and still further more preferably 80 W or more.

The output of the high-frequency electric field is preferably 50,000 W or less, more preferably 20,000 W or less, still more preferably 15,000 W or less, still further more preferably 10,000 W or less, and yet still further more preferably 1,000 W or less.

When the output of the high-frequency electric field is 10 W or more, it is possible to prevent a problem in that the temperature is not easily increased during dielectric heating, so that favorable bonding strength is easily obtained.

When the output of the high-frequency electric field is 50,000 W or less, it is easy to prevent a problem in that temperature control through dielectric heating is difficult. The high-frequency output represents the magnitude of energy transferred to an object.

The application time of the high-frequency electric field is preferably 1 second or more.

The application time of the high-frequency electric field is preferably 300 seconds or less, more preferably 240 seconds or less, still more preferably 180 seconds or less, still further more preferably 120 seconds or less, yet still further more preferably 90 seconds or less, and even still further more preferably 50 seconds or less.

When the application time of the high-frequency electric field is 1 second or more, it is possible to prevent a problem in that the temperature is not easily increased during dielectric heating, so that favorable adhesive force is easily obtained.

When the application time of the high-frequency electric field is 300 seconds or less, it is easy to prevent problems such as a decrease in manufacturing efficiency of the assembly, an increase in the manufacturing cost, and thermal deterioration of the adherends.

The frequency of the high-frequency electric field applied is preferably 1 kHz or more, more preferably 1 MHz or more, still more preferably 3 MHz or more, still further more preferably 5 MHz or more, and yet still further more preferably 10 MHz or more.

The frequency of the high-frequency electric field applied is preferably 300 MHz or less, more preferably 100 MHz or less, still more preferably 80 MHz or less, and still further more preferably 50 MHz or less. Specifically, 13.56 MHz, 27.12 MHz, or 40.68 MHz, which is an industrial frequency band allocated by the International Telecommunication Union, is also used in the manufacturing method and the bonding method using high-frequency dielectric heating according to the present exemplary embodiment. The frequency of the high-frequency electric field applied represents a manner (speed) of transferring energy.

When a high-frequency electric field is applied while pressure treatment is performed, the pressing pressure during the application of a high-frequency wave is, as an initial set value of the pressure applied to the high-frequency dielectric heating adhesive, preferably 1 kPa or more, more preferably 5 kPa or more, still more preferably 10 kPa or more, still further more preferably 30 kPa or more, and yet still further more preferably 50 kPa or more.

When a high-frequency electric field is applied while pressure treatment is performed, the pressing pressure during the application of a high-frequency wave is, as an initial set value of the pressure applied to the high-frequency dielectric heating adhesive, preferably 10 MPa or less, more preferably 5 MPa or less, still more preferably 1 MPa or less, still further more preferably 500 kPa or less, and yet still further more preferably 100 kPa or less.

Herein, the area serving as a reference for the initial set value of the pressure applied to the high-frequency dielectric heating adhesive is the smallest area among the areas when the electrodes, the adherends, and a spacer are seen in plan view.

### Modifications of Exemplary Embodiments

The invention is not limited to the above exemplary embodiments. The invention may include modifications and improvements so long as the object of the invention can be achieved.

In the high-frequency dielectric heating, the high-frequency dielectric heater is not limited to the dielectric heater with the electrodes disposed so as to face each other as described in the above exemplary embodiments, and a grid electrode-type high-frequency dielectric heater may also be used. The grid electrode-type high-frequency dielectric heater includes grid electrodes in which electrodes of a first polarity and electrodes of a second polarity opposite to the first polarity are alternately arranged at regular intervals on the same plane. In the drawing, an example of a dielectric heater in which the electrodes are disposed so as to face each other is illustrated for simplification.

### Examples

The invention will be described in more detail below with reference to Examples. The invention is not limited to these Examples at all.

### Production of High-frequency Dielectric Heating Adhesive

### Examples 1 to 5 and Comparative Example 1

A thermoplastic resin (A) and a cyano group-containing organic compound (B) were premixed as materials for producing a high-frequency dielectric heating adhesive (adhesive sheet) at a composition shown in Table 1.

The premixed material was fed to a hopper of a 30-mmΦ twin-screw extruder. A cylinder set temperature was adjusted in a range from 160 degrees C to 200 degrees C, a die temperature was adjusted to 200 degrees C, and the premixed material was melt-kneaded. The melt-kneaded material was cooled and then cut to produce granular pellets. Subsequently, the produced granular pellets were charged into a hopper of a single-screw extruder equipped with a T-die. A cylinder temperature was adjusted to 180 degrees C, and a die temperature was adjusted to 200 degrees C. A film-shaped melt-kneaded product was extruded from the T-die and cooled with cooling rolls. Thus, sheet-shaped high-frequency dielectric heating adhesives (high-frequency dielectric heating adhesive sheets) having a thickness of 400 µm according to Examples 1 to 5 and Comparative example 1 were each produced.

The thermoplastic resin (A) and the cyano group-containing organic compound (B) shown in Table 1 are as follows.

### Thermoplastic resin (A)

PP: Polypropylene, product name "Prime Polypro F-744NP", manufactured by Prime Polymer Co., Ltd.
m-PP: Maleic anhydride-modified polypropylene, product name "Modic P565", manufactured by Mitsubishi Chemical Corporation

### Cyano group-containing organic compound (B)

CEP: Cyanoethyl pullulan, "Cyanoresin CR-S", manufactured by Shin-Etsu Chemical Co., Ltd.

CEC: Cyanoethyl cellulose, "Cyanoresin CR-C", manufactured by Shin-Etsu Chemical Co., Ltd.

### MFR: Melt flow rate

The MFR of the cyano group-containing organic compound (B) was measured using a falling-type flow tester (Model number "CFT-100D", manufactured by Shimadzu Corporation). The measurement was conducted under the conditions of a temperature of 190 degrees C at a load of 5.0 kg using a die with a hole shape of Φ 2.0 mm and a length of 5.0 mm and a cylinder with an inner diameter of 11.329 mm. The results are shown in Table 1.

### Dielectric property

A sheet-shaped product of the cyano group-containing organic compound (B) was cut into a size of 30 mm in length and 30 mm in width. Regarding the cut sheet of the cyano group-containing organic compound (B), a dielectric material test fixture 16453A (manufactured by Agilent Technologies) was attached to an RF impedance/material analyzer E4991A (manufactured by Agilent Technologies), and the relative dielectric constant (ε'r) and the dielectric loss tangent (tanδ) were respectively measured by a parallel plate method under the conditions of 23 degrees C and a frequency of 40.68 MHz. The value of the dielectric property (tanδ/ε'r) was calculated on the basis of the measurement results. The results are shown in Table 1.

### Amount of cyano groups introduced

The amount of cyano groups introduced into the cyano group-containing organic compound (B) was determined as a percentage of a value obtained by dividing the number of hydroxyl groups modified with cyanoalkyl groups by the total number of hydroxyl groups in the organic compound. Specifically, the amount of cyano groups introduced was determined as a calculated value by a numerical formula (F1) below. The results are shown in Table 1. Note that the amount of cyano groups introduced was determined only for cyanoethyl pullulan. Amount introduced (mol%) = (the number of moles of hydroxyl groups modified with cyanoalkyl groups/the number of total moles of hydroxyl groups) × 100

### Adherend

Plate-shaped adherends with a length of 25 mm, a width of 100 mm, and a thickness of 1.5 mm were produced using a glass fiber-reinforced polypropylene resin plate.

### Evaluations of High-frequency Dielectric Heating Adhesive

Each of the high-frequency dielectric heating adhesives (adhesive sheets) was evaluated as described below. The evaluation results are shown in Table 2.

### Dielectric property

The produced high-frequency dielectric heating adhesive sheet was cut into a size of 30 mm in length and 30 mm in width. Regarding the cut high-frequency dielectric heating adhesive sheet, a dielectric material test fixture 16453A (manufactured by Agilent Technologies) was attached to an RF impedance/material analyzer E4991A (manufactured by Agilent Technologies), and the relative dielectric constant (ε'r) and the dielectric loss tangent (tanδ) were respectively measured by a parallel plate method under the conditions of 23 degrees C and a frequency of 40.68 MHz. The value of the dielectric property (tanδ/ε'r) was calculated on the basis of the measurement results.

### Tensile modulus and tensile rupture elongation

The produced high-frequency dielectric heating adhesive sheet was cut into a test piece having a length of 150 mm (TD direction) and a width of 15 mm (MD direction). The test piece was held by chucks of a testing machine, and the tensile modulus (MPa) and the tensile rupture elongation (%) at 23 degrees C were measured in accordance with JIS K 7161-1:2014 and JIS K 7127:1999. The tensile modulus (MPa) and the tensile rupture elongation (%) were measured with a tensile tester (Autograph AG-IS 500N, manufactured by Shimadzu Corporation). The distance between the chucks was set to 100 mm. The tensile speed in the measurement of the tensile modulus (MPa) and the tensile rupture elongation (%) was set to 200 mm/min. The results are shown in Table 2.

### Total luminous transmittance and haze value

A turbidimeter (HAZEMETER ND H5000, manufactured by Nippon Denshoku Industries Co., Ltd.) was used to measure the total luminous transmittance in accordance with JIS K 7361-1:1997 and to measure the haze value in accordance with JIS K 7136:2000. The results are shown in Table 2.

### Adhesiveness (Bonding strength)

First, the produced high-frequency dielectric heating adhesive (adhesive sheet) was cut into dimensions of 25 mm in length and 12.5 mm in width. Two adherends, which were the glass fiber-reinforced polypropylene resin plates described above (25 mm in length, 100 mm in width, and 1.5 mm in thickness), were prepared. The adhesive sheet cut into the size described above was disposed between the two adherends and stacked.

Next, the adherends and the adhesive sheet stacked in this manner were fixed between two electrodes of a high-frequency dielectric heater (product name "YRP-400T-A", manufactured by Yamamoto Vinita Co., Ltd.). In the fixed state, a high-frequency electric field was applied under high-frequency application conditions described below to bond the high-frequency dielectric heating adhesive sheet and the adherends together, and a test piece for adhesiveness evaluation was thereby produced. The pressing pressure during the application of the high-frequency electric field is an initial set value of the pressure applied to the adhesive sheet.

### Application conditions of high-frequency electric field

Frequency: 40.68 MHz
Output: 200 W
Application time: 15 seconds
Pressing pressure: 0.62 MPa

The tensile shear force (unit: MPa) of the resulting test piece was measured as adhesive force. For the measurement of the tensile shear force, a universal tensile tester (Instron 5581, manufactured by Instron) was used. The tensile speed in the measurement of the tensile shear force was set to a tensile speed of 100 mm/min. The tensile shear force was measured in accordance with JIS K 6850:1999. The results are shown in Table 2.

The adhesiveness of the produced test piece for adhesiveness evaluation was evaluated in accordance with the following criteria.
A: The bonding strength was 1 MPa or more, or an adherend was broken.
F: The bonding strength was less than 1 MPa, or peeling occurred at an interface between the adhesive sheet and an adherend.

### Ratio of nitrogen atoms

For each of the high-frequency dielectric heating adhesives (adhesive sheets) of Examples 1 and 2, the surface of the high-frequency dielectric heating adhesive was analyzed with an X-ray photoelectron spectrometer ("Quantra SXM", manufactured by ULVAC, Inc.) to calculate the ratio of nitrogen atoms relative to 100 atom% of the total of carbon atoms (C), oxygen atoms (O), silicon atoms (Si), and nitrogen atoms (N). The ratio of nitrogen atoms was specifically calculated by a numerical formula (F2) below on the basis of the amounts (the numbers of counts in XPS) of the nitrogen atoms (N), silicon atoms (Si), carbon atoms (C), and oxygen atoms (O). The results are shown in Table 3.

Note that the total of carbon atoms (C), oxygen atoms (O), silicon atoms (Si), and nitrogen atoms (N) shown in Table 3 is 100 atom%. Ratio of nitrogen atoms (atom%) = [(amount of N atoms)/{(amount of C atoms) + (amount of O atoms) + (amount of Si atoms) + (amount of N atoms)}] × 100

**[Table 1]**

| | Composition of adhesive sheet | | | | | | | | |
|---|---|---|---|---|---|---|---|---|---|
| | Thermoplastic resin (A) | | Cyano group-containing organic compound (B) | | | | | Dielectric filler | |
| | Type | Content | Type | Content | Amount of cyano groups introduced | MFR (190 degrees C) | Dielectric property | Type | Content |
| | | (vol%) | | (vol%) | (mol%) | (g/10 min) | (-) | | (vol%) |
| Example 1 | PP | 80 | CEP | 20 | 67 | 2.7 | 0.027 | - | - |
| Example 2 | PP | 70 | CEP | 30 | 67 | 2.7 | 0.027 | - | - |
| Example 3 | m-PP | 80 | CEP | 20 | 67 | 2.7 | 0.027 | - | - |
| Example 4 | PP | 80 | CEC | 20 | - | 6.2 | 0.029 | - | - |
| Example 5 | m-PP | 90 | CEP | 10 | 67 | 2.7 | 0.027 | - | - |
| Comparative Example 1 | PP | 80 | - | - | - | - | - | ZnO | 20 |

**[Table 2]**

| | Physical properties of adhesive sheet | | | | | |
|---|---|---|---|---|---|---|
| | Dielectric property | Optical properties | | Tensile modulus | Tensile rupture elongation | Bonding strength |
| | | Haze value | Total luminous transmittance | | | |
| | (-) | (%) | (%) | (MPa) | (%) | |
| Example 1 | 0.010 | 54.1 | 91.8 | 654 | 7.2 | A |
| Example 2 | 0.013 | 52.4 | 82.2 | 680 | 50 | A |
| Example 3 | 0.015 | 668 | 98.1 | 668 | 137 | A |
| Example 4 | 0.011 | 55.6 | 72.1 | 665 | 2.8 | A |
| Example 5 | 0.008 | 75.3 | 85.4 | 694 | 12 | A |
| Comparative Example 1 | 0.011 | 97.0 | 24.6 | 637 | 827 | A |

**[Table 3]**

| | Surface measurement results of adhesive sheet by XPS | | | |
|---|---|---|---|---|
| | Carbon atom (C) | Nitrogen atom (N) | Oxygen atom (O) | Silicon atom (Si) |
| | atom% | atom% | atom% | atom% |
| Example 1 | 93.32 | 1.07 | 4.90 | 0.71 |
| Example 2 | 93.63 | 1.67 | 4.37 | 0.33 |

The result of the total luminous transmittance of each Example was superior to that of Comparative Example 1. In addition, the result of the adhesiveness of each Example was favorable as in Comparative Example 1. These results show that the high-frequency dielectric heating adhesive according to the present exemplary embodiment provides a high-frequency dielectric heating adhesive that has high transparency and that enables bonding in a short time.

### EXPLANATION OF CODES

100 ... assembly, 1A ... high-frequency dielectric heating adhesive, 50 ... dielectric heater, 51 ... electrode (first high-frequency electric field application electrode), 52 ... electrode (second high-frequency electric field application electrode), 53 ... high-frequency power source, 110 ... adherend (first adherend), 120 ... adherend (second adherend)

## Claims

1. A high-frequency dielectric heating adhesive comprising:
a thermoplastic resin (A); and
a cyano group-containing organic compound (B),
wherein the high-frequency dielectric heating adhesive satisfies (1) below:
(1) the high-frequency dielectric heating adhesive has a total luminous transmittance of 50% or more as measured in accordance with JIS K 7361-1:1997.

2. The high-frequency dielectric heating adhesive according to claim 1,
wherein the high-frequency dielectric heating adhesive further satisfies (2) below:
(2) the high-frequency dielectric heating adhesive has a dielectric property (tanδ/ε'r) of 0.008 or more,
where tanδ is a dielectric loss tangent at 23 degrees C and a frequency of 40.68 MHz, and
ε'r is a relative dielectric constant at 23 degrees C and a frequency of 40.68 MHz.

3. The high-frequency dielectric heating adhesive according to claim 1 or 2,
wherein the high-frequency dielectric heating adhesive further satisfies (3) below:
(3) the high-frequency dielectric heating adhesive has a haze value of 90% or less as measured in accordance with JIS K 7136:2000.

4. The high-frequency dielectric heating adhesive according to claim 1 or 2,
wherein the cyano group-containing organic compound (B) has a dielectric property (tanδ/ε'r) of 0.02 or more,
where tanδ is a dielectric loss tangent at 23 degrees C and a frequency of 40.68 MHz, and
ε'r is a relative dielectric constant at 23 degrees C and a frequency of 40.68 MHz.

5. The high-frequency dielectric heating adhesive according to claim 1 or 2, wherein the cyano group-containing organic compound (B) has an MFR in a range from 0.5 g/10 min to 50 g/10 min at 190 degrees C.

6. The high-frequency dielectric heating adhesive according to claim 1 or 2, wherein the cyano group-containing organic compound (B) is a cyanoethyl group-containing organic compound.

7. The high-frequency dielectric heating adhesive according to claim 6, wherein the cyanoethyl group-containing organic compound is at least one selected from the group consisting of cyanoethyl pullulan, cyanoethyl polyvinyl alcohol, cyanoethyl saccharose, cyanoethyl cellulose, cyanoethyl hydroxyethyl cellulose, cyanoethyl starch, cyanoethyl hydroxypropyl starch, cyanoethyl glycidol pullulan, and cyanoethyl sorbitol.

8. The high-frequency dielectric heating adhesive according to claim 1 or 2, wherein an amount of a cyano group introduced into the cyano group-containing organic compound (B) is in a range from 50 mol% to 80 mol%.

9. The high-frequency dielectric heating adhesive according to claim 1 or 2, wherein a content of the cyano group-containing organic compound (B) is in a range from 10 vol% to 60 vol% relative to an entirety of the high-frequency dielectric heating adhesive.

10. The high-frequency dielectric heating adhesive according to claim 1 or 2, wherein a content of the thermoplastic resin (A) is in a range from 40 vol% to 90 vol% relative to an entirety of the high-frequency dielectric heating adhesive.

11. The high-frequency dielectric heating adhesive according to claim 1 or 2, wherein on a surface of the high-frequency dielectric heating adhesive measured by X-ray photoelectron spectroscopy (XPS), a ratio of nitrogen atoms to 100 atom% of a total of carbon atoms, oxygen atoms, silicon atoms and the nitrogen atoms is in a range from 0.05 atom% to 2 atom%.

12. The high-frequency dielectric heating adhesive according to claim 1 or 2, wherein the high-frequency dielectric heating adhesive is a high-frequency dielectric heating adhesive sheet.
